# EUROPÄISCHE PATENTSCHRIFT

(11) **EP 2 935 135 B1**
(45) Veröffentlichungstag und Bekanntmachung des Hinweises auf die Patenterteilung: **30.08.2017**
(21) Anmeldenummer: 13824293.8
(22) Anmeldetag: 02.12.2013
(51) Int. Cl.: C03B 33/033, C03B 18/02, C03B 33/10, C03B 33/037, C03B 33/027

(54) **VORRICHTUNG ZUM ERZEUGEN EINER SICHEREN BRUCHLINIE FÜR DAS INDUSTRIELLE ABLÄNGEN VON GLASSCHEIBEN**
DEVICE FOR PRODUCING A SAFE BREAKING LINE FOR THE INDUSTRIAL CUTTING OF GLASS
DISPOSITIF D'OBTENTION D'UNE LIGNE DE RUPTURE SÛRE POUR LA DÉCOUP INDUSTRIELLE DE VERRE

(30) Priorität: 20.12.2012 DE 102012025091
(43) Veröffentlichungstag der Anmeldung: 28.10.2015
(73) Patentinhaber: Grenzebach Maschinenbau GmbH, 86663 Asbach-Baeumenheim (DE)
(72) Erfinder: LINNHOFF, Winhold, D-14476 Postdam (DE); SCHÖNHEITS, Klaus, D-89434 Blindheim (DE); MÜLLER, Michael, D-86609 Donauwörth (DE)
(74) Vertreter: Kindermann, Peter
(86) Internationale Anmeldenummer: PCT/DE2013/000718
(87) Internationale Veröffentlichungsnummer: WO 2014/094704

(56) Entgegenhaltungen:
- EP-A1- 0 837 042
- CA-A- 1 077 823
- JP-A- 2001 106 541
- US-A1- 2006 255 083
- US-A1- 2012 214 654

## Beschreibung

Die Erfindung betrifft eine Vorrichtung zum Erzeugen einer sicheren Bruchlinie für das industrielle Ablängen von Glasscheiben.
Aus dem Stand der Technik ist zu dem Thema des Ablängens von Glasscheiben zum Beispiel aus der DE 10 2004 025 329 B4 ein Verfahren zum verschnittarmen Zuschnitt von Rohlingen für Autoglasscheiben oder andere Glasscheiben auf einer Floatglasproduktionslinie bekannt.
Dieser Patentschrift liegt die Aufgabe zugrunde, bei einem seit vielen Jahrzehnten praktizierten Verfahren zum Zuschneiden von Autoscheiben die beträchtliche Menge Verschnitt zu reduzieren und eine wirtschaftliche Fertigung von Autoglasscheiben zu ermöglichen.
Zur Lösung dieser Aufgabe wird nach dem Anspruch 1 ein Verfahren zum verschnittarmen Zuschnitt von Rohlingen für Autoglasscheiben oder andere Glasscheiben, die im Wesentlichen eine symmetrische oder asymmetrische Trapezform haben, unter Schutz gestellt. Hierbei werden die trapezförmigen Glasplatten direkt auf einer Floatglasproduktionslinie aus dem herangeführten Floatglasband herausgeschnitten und das Schneidemuster wird so gewählt, dass jeweils zwei um 180° relativ zueinander gedreht orientierte Glasplatten mit einer entsprechenden Schrägkante direkt aneinander stoßend und mit ihren parallelen Trapezkanten miteinander fluchtend in Gestalt eines Streifens auf dem Floatglasband angeordnet sind. Weiter wird beansprucht, dass in Richtung des Floatglasbandes aufeinander folgende Glasplattenpaarstreifen unmittelbar aneinander grenzen, wobei weiter die mit Bezug auf die Glasbandachse schräg verlaufenden schrägen Trapezkanten mit entsprechend geführten Längsschneideorganen geschnitten werden und die die Streifenränder bildenden parallelen Trapezkanten mittels Querschneideorganen geschnitten werden.
Hierbei geht es jedoch nicht um Schnittvorgänge bei schnell laufenden Floatglas - Zuschnitten.
In der DE 10 2009 023 602 B4 wird weiter eine Vorrichtung zum industriellen Herstellen elastisch verformbarer großflächiger Glasplatten in hoher Stückzahl beschrieben.

Dieser Vorrichtung liegt die Aufgabe zugrunde, eine Vorrichtung zum Trennen von elastisch verformbaren großformatigen Glasplatten mittels Laserstrahlen anzugeben, das relativ preiswert, großtechnisch einsetzbar und ausfallsicher ist.
Als Lösung dieser Aufgabe wird im Anspruch 1 eine Vorrichtung mit den folgenden Merkmalen beansprucht:
a) eine Einrichtung zum Zuführen einer Glasplatte (3), wobei die Lage ihrer vorderen Kante erfasst und in der gewünschten Position fixiert wird,
b) eine Einrichtung zum Anbringen einer Initialverletzung an der Oberseite der Glasplatte (3) im Bereich der gewünschten Bruchlinie c) eine Einrichtung zur lokal begrenzten Erhitzung der Glasoberfläche mit einem, sich fächerförmig schwenkend auf einer geraden Linie bewegenden, Laserstrahl, wobei dieser in einer rohrartigen Laserstrahlführung (10) und einer anschließenden Umlenkeinrichtung (11) in einen Laserkopf (5) geführt wird und die gesamte Wegstrecke die der Laserstrahl geführt wird aus einem Raum besteht, in dem gegenüber der Umwelt ein leichter Überduck herrscht,
d) eine Einrichtung zur Kühlung der Glasoberfläche, wobei auf mindestens einer Seite des Laserstrahls mindestens eine intermittierend betreibbare und in der Intensität steuerbare Kühldüse (19) angeordnet ist, die ein, in der Temperatur und der Fördermenge veränderbares, Fluid fördert, und wobei das Kühlmittel mit einem Luftdruck von 5 bis 10 bar aufgebracht wird,
e) eine Einrichtung zum Transport einer thermisch lokal vorbehandelten Glasplatte in den Bereich einer Einrichtung zum Brechen der Glasplatte,
f) eine Einrichtung zur Detektion einer geradlinigen Rißbildung an der Oberfläche einer Glasplatte (3), wobei bevorzugt eine Einrichtung zur Beaufschlagung der Glasoberfläche mit einem Flüssigkeits - Kondensat, z.B. Wasserdampf besteht, wobei die steuerungstechnische Erfassung der Rißbildung mittels einer Beleuchtungseinrichtung in Verbindung mit einem Kamera - System erfolgt,
g) ein geradliniges Brechschwert an der Unterseite der Glasplatte das einseitig und / oder beidseitig anhebbar ist, wobei kürzere Plattenstücke, bei denen die Schwerkraft, bzw. deren Eigengewicht, zum Abbruch nicht ausreicht, durch mindestens einen, motorisch verfahrbaren, Niederhalter (27) niedergehalten werden.

Hohe Geschwindigkeiten bei der Rißbildung, wie bei der Trennung von Floatglas notwendig, lassen sich mit diesem Verfahren jedoch nicht erzielen.

Eine Vorrichtung zum Ritzen von Glas bestehend aus einer Schneideinrichtung, die ein Schneidwerkzeug trägt, und aus einer mit der Schneideinrichtung verbundenen Einrichtung zur Übertragung einer Schneidbelastung auf die Schneideinrichtung, ist in der DE 28 34 672 C2 beschrieben.
Mit dieser Vorrichtung sollen die der Schneidbelastung entgegenwirkenden Reaktionskräfte beim Aufsetzen des Schneidwerkzeugs auf die Glasfläche gedämpft werden. Es soll insbesondere verhindert werden, dass beim Aufsetzen des Schneidwerkzeugs auf die Glasfläche bei hoher Schneidgeschwindigkeit durch die Reaktionskraft eine vorübergehende wesentliche Verminderung der Belastungskraft auftritt, die unter Umständen ein Zurückspringen des Schneidwerkzeugs von der Glasfläche veranlasst.
Gelöst wird diese Aufgabe hier durch einen Block aus elastischem Material, der einen Teil der Energie aufnimmt, die von den der Schneidbelastung entgegen wirkenden Reaktionskräften erzeugt wird, wenn das Schneidwerkzeug in Berührung mit der Glasfläche gebracht wird.

Aus der den Oberbegriff des Patentanspruchs 1 bildenden EP 0 837 042 A1 ist eine gesteuerte Maschine zum Schneiden von Glastafeln nach vorgeschriebenen Linien bekannt.

In der US 2006/255083 A1 ist eine gesteuerte Kerbbrücke beschrieben, wobei ein Beginn einer Bruchlinie für eine Glasscheibe bestimmt wird, ein Schneidrad mit einem gewünschten Anpressdruck auf die Glasscheibe abgesenkt wird und bei Veränderung einer Höhe der Glasscheibe eine Änderung des Anpressdrucks des Schneidrads bewirkt wird.

Aus der JP 2001 106541 A ist ferner eine Schreib-Einheit bekannt, wobei mehrere Vorrichtungen revolverartig in der Art eines Werkzeugwechselkopfes angeordnet sind.

Der Erfindung liegt die Aufgabe zugrunde, eine neuartige Schneidvorrichtung für Glasplatten in der Floatglas-Herstellung vorzustellen, die ein sicheres Aufsetzen des Schneidwerkzeugs auf die Glasplatte und einen von Aussetzern freien Betrieb gewährleistet, wobei die absolute Unempfindlichkeit gegen Glasstaub gewährleistet ist. Ferner soll die Weitergabe von Informationen über die Höhenlage des Glasbandes verbessert werden.

Erfindungsgemäß wird diese Aufgabe durch die Merkmale des Patentanspruchs 1 gelöst.

In den Unteransprüchen sind weitere vorteilhafte Ausgestaltungen der Erfindung gekennzeichnet.

Im Folgenden wird die Erfindung anhand von Figuren näher beschrieben.
Es zeigen im Einzelnen:
Fig.1: eine perspektivische Darstellung der Gesamtvorrichtung ,
Fig.2: eine Schnittzeichnung durch die Gesamtvorrichtung,
Fig.3: eine Schnittzeichnung durch die Schwingarmhalterung 6, und
Fig.4: eine Schnittzeichnung durch einen erfindungsgemäßen Werkzeugwechselkopf.

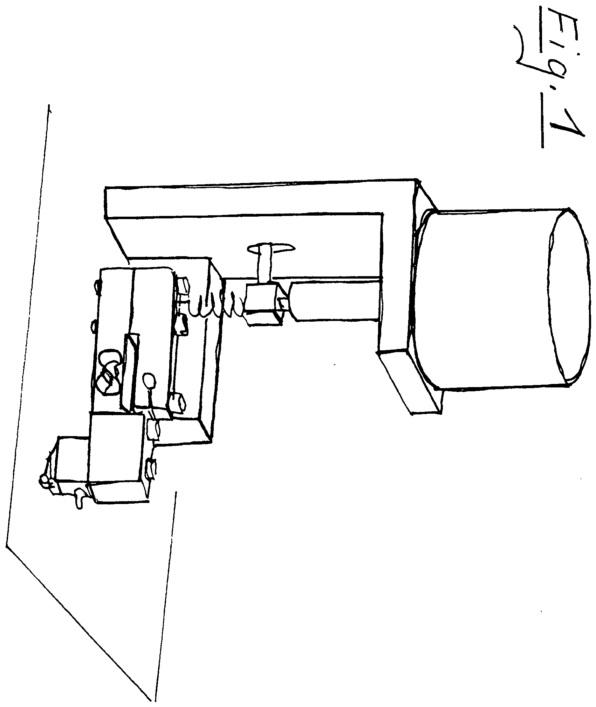

Die Fig.1 zeigt eine perspektivische Darstellung der Gesamtvorrichtung.
Hier ist in der horizontalen Lagerung eine zu schneidende Glasscheibe zu sehen über der auf einem L - förmigen Tragarm ein zylinderförmiger Stellmotor gelagert ist. Am Fuße dieses Tragarms ist ein Lagerblock befestigt der die Lagerung der eigentlichen Schneidvorrichtung ermöglicht. Die weitere Halterung des Tragarms und seine Verbindung zu anderen Maschinenteilen sind hier nicht dargestellt.

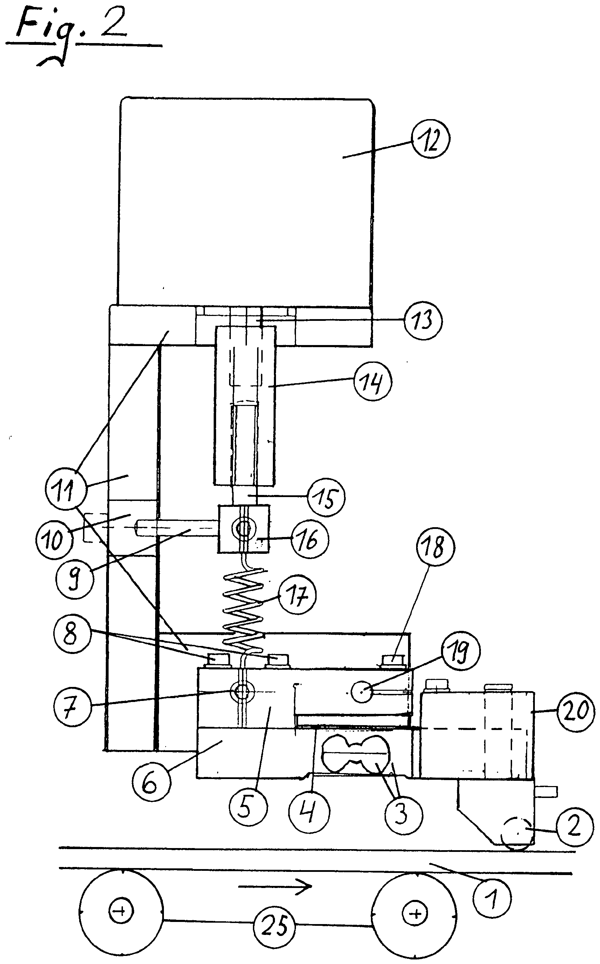

In der Fig. 2 sind mittels einer Schnittzeichnung Details der perspektivischen Darstellung der Fig. 1 zu erkennen.

Über einer Glasscheibe 1, die auf Transportrollen 25 läuft, ist in freier Lage eine Grundkonsole 11 zu sehen, die im Wesentlichen dem L - förmigen Tragarm und dem Lagerblock aus der Fig.1 entspricht. Auf der Grundkonsole 11 ist ein Stellmotor 12 gelagert, mit dessen Motorachse 13 eine Verbindungshülse 14 mit Innengewinde fest verbunden ist. In dem Innengewinde der Verbindungshülse 14 ist eine Gewindespindel 15 eingeschraubt die mit einem Verbindungselement 16 verbunden

ist das einen Führungsstift 9 besitzt. Der Führungsstift 9 ist nahezu spielfrei in einem Führungsschlitz 10 der Grundkonsole 11 gelagert. Aus dieser Darstellung ergibt sich, dass das Verbindungselement 16 mittels einer Drehung der Motorachse 13 vertikal stufenlos verstellt werden kann.
In dem, in der Fig.1 erwähnten, Lagerblock der Grundkonsole 11 ist in horizontaler Lage eine Drehachse 19 eingelassen, auf der ein Drehkopf 5 mittels einer Klemmschraube 18 befestigt ist. Dieser Drehknopf 5 ist mittels einer Federbefestigung 7 über ein Federelement 17 mit dem Verbindungselement 16 verbunden.
An der Unterseite des Drehkopfs 5 ist eine Schwingarmhalterung 6 mittels zweier Schraubverbindungen 8 befestigt auf deren entgegengesetzter Seite ein Schneidradhalter 20 angeordnet ist der wiederum das Schneidrad 2 trägt.
Die Schwingarmhalterung 6 weist im mittleren Bereich eine als Schwingarm 3 bezeichnete Zone auf, die im Wesentlichen aus einer Anordnung von ineinander greifenden zylinderförmigen Aussparungen besteht, die diese Zone im Querschnitt verringern und somit die Aufnahme von Biegemomenten ermöglichen. Hiermit wird erreicht, dass quasi die gesamte Schwingarmhalterung 6 bezüglich Stößen die aus dem Bereich des Schneidradhalters 20 einwirken, elastisch nachgibt und wie ein Schwingarm wirkt. Die Durchsicht durch die erwähnten Aussparungen zeigt die Unterkante der Grundkonsole 11. Um die Schwingungen des Schwingarms 3 aufzunehmen ist an der Oberseite des Schwingarms 3 ein Dehnungsmessstreifen 4 befestigt.
Auf diese Weise können die durch den Dehnungsmessstreifen 4 erfassten vertikalen Lageveränderungen des Schneidrads 2 weiter verarbeitet und ausgewertet werden.

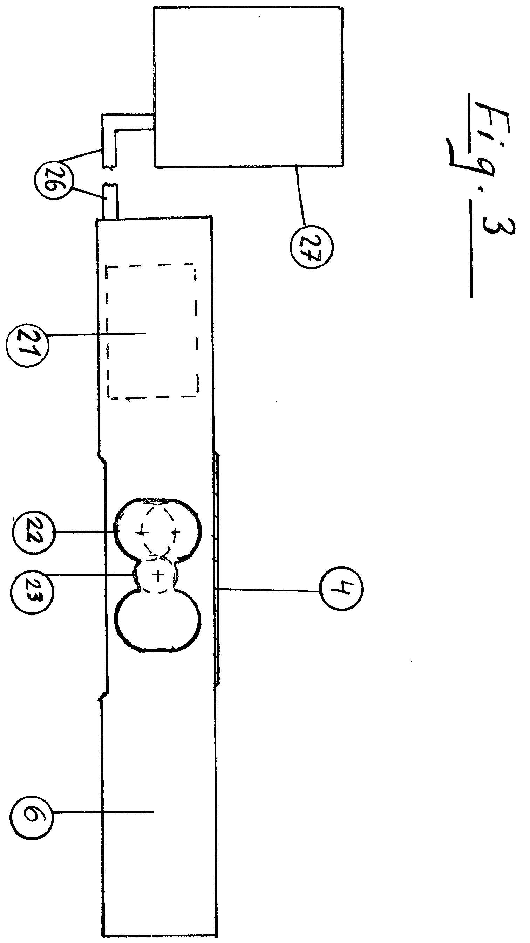

Die Fig.3 zeigt eine Schnittzeichnung durch die Schwingarmhalterung 6.
Die als ganzes Teil als Schwingarmhalterung 6 bezeichnete Baueinheit weist in ihrem mittleren Teil gemäß der Fig.2 eine als Schwingarm 3 bezeichnete Aussparung auf die im Wesentlichen aus 5 einzelnen ineinander übergehenden zylinderförmigen Aussparungen in einer bestimmten Anordnung besteht, wobei die Radien der Stirnflächen dieser Zylinder in einem besonderen Verhältnis zueinander stehen und in der Fig.3 im Wesentlichen als Kreise dargestellt sind. Der Radius eines großen Kreises ist mit 22 bezeichnet, der Radius des kleinen Kreises mit 23.

Diese zylinderförmigen Aussparungen bestehen aus 4 größeren Aussparungen von denen jeweils zwei Paare dieser Aussparungen ineinander übergehen und sich in der Art einer vesica piscis (Fischblase) überlappen, und wobei beide Paare mittels einer kleineren zylindrischen Aussparung miteinander verbunden sind.
Der Abstand der Entfernung vom Mittelpunkt des kleinen Kreises zum Mittelpunkt eines großen Kreises entspricht dem doppelten Radius 23 des kleinen Kreises. Das Verhältnis des Radius des kleinen Kreises verhält sich zum Radius eines größeren Kreises wie 1 zu 1,55.
Von dem Dehnungsmessstreifen 4 führt eine elektrische Verbindung zu einer zugehörigen Messelektronik 21 und von dort führt ein Datenkabel 26 zur Steuerung 27, die entsprechende Steuerungssignale zur Betätigung des Stellmotors 12 schickt. Auf diese Weise kann mittels der Veränderung der Lage des Verbindungselements 16 in vertikaler Richtung und eine entsprechende Drehung der Schwingarmhalterung 6 über die Spiralfeder 17 der Druck des Schneidrads 2 auf die Glasscheibe 1 schnell verändert und sich ändernden Verhältnissen angepasst werden.
Dies kann zum Beispiel erforderlich sein wenn die Transportrollen 25 unruhig laufen, und / oder Glassplitter zwischen die Glasscheibe 1 und eine Transportrolle 25 geraten. Es können jedoch auch durch ganz unmerkliche Dicken - Änderungen in der Floatglasscheibe 1 geben, die zur Erzielung einer konstanten Ritztiefe ausgeglichen werden müssen.
Abgesehen davon kann natürlich auf eine im Produktionsprozess vorhersehbare Änderung der Dicke des Floatglasbandes steuerungstechnisch leicht reagiert werden.
So kann mit der erfindungsgemäßen Vorrichtung die Ermittlung der Glasdicke im jeweils vorliegenden Fall leicht ermittelt werden und als Prozessparameter gespeichert und genutzt werden.

Es ergibt sich hierbei folgender Arbeitsablauf:
1. Das Schneidrad 2 berührt die Glasscheibe 1.
2. Der Dehnungsmessstreifen 4 erzeugt ein Signal das der Dicke der Glasscheibe 1 entspricht.
3. Die ermittelte Position des Schneidrads 2 wird im System gespeichert.
4. Bei jedem weiteren Bearbeitungsvorgang kann der notwendige Anpressdruck für die betreffende Glasscheibe 1 errechnet und eingestellt werden.
5. Die Vorgänge 1 bis 4 ermöglichen in der Folge ein schnelles Anfahren des Schneidrads 2 und ebenso ein schnell optimiertes und sicheres Eindringen des Schneidrads 2 in die jeweilige Glasscheibe 1.

In der Messelektronik 21 befinden sich im Wesentlichen eine Vorrichtung zur Erzeugung der für die Betätigung des Dehnungsmessstreifens 4 benötigte Speisespannung, eine zur Erfassung der Widerstands - Änderung des Dehnungsmessstreifens 4 benötigte elektrische Brückenschaltung und eine zur Weiterleitung des Messsignals erforderliche Verstärkerschaltung.
Da der Betrieb eines Dehnungsmessstreifens auch von der Umgebungstemperatur abhängt, befindet sich im Bereich der Messelektronik 21 auch ein Temperatursensor.

Es existieren verschiedene Messverfahren für Dehnungsmessstreifen. von denen der Fachmann das im vorliegenden Fall geeignete auswählen kann.
Mit der beschriebenen Vorrichtung ist es möglich durch sofortige Reaktion mit hoher Geschwindigkeit auf Veränderungen zu reagieren die das Schnittergebnis beeinflussen können.

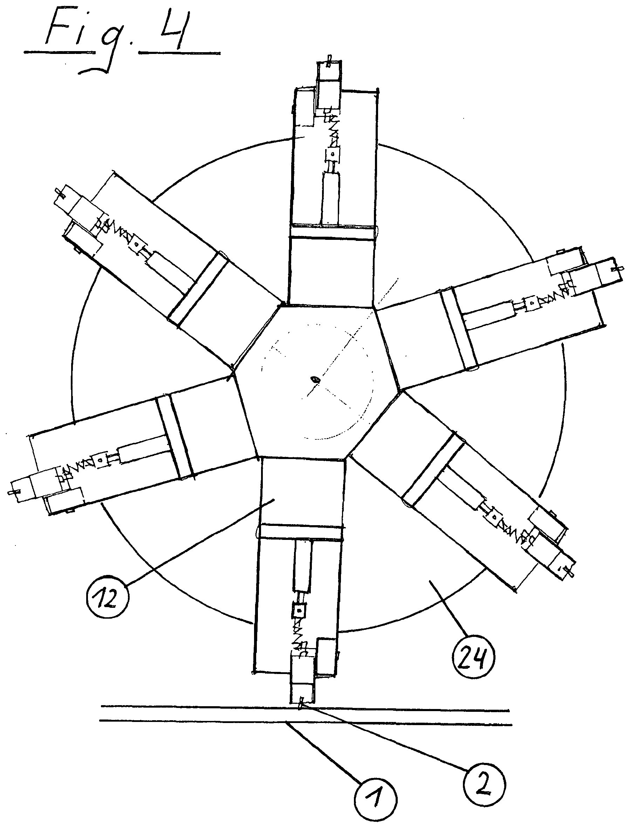

Fig.4 zeigt eine Schnittzeichnung durch einen erfindungsgemäßen Werkzeugwechselkopf.
Hier ist eine Vorrichtung zum schnellen Wechsel von Werkzeugen mit unterschiedlichen Größen an Schneidrädern 2 oder unterschiedlichen Ausstattungen an Dehnungsmessstreifen 4 oder Spiralfedern 17 dargestellt. So ist es zum Beispiel möglich schnell auf Änderungen bei der Dicke der zu schneidenden Floatglasplatte zu reagieren.

In einer besonderen Ausgestaltung kann vorgesehen sein, dass mittels eines nicht näher bezeichneten Sensors die Höhenlage der vor dem Schneidvorgang unmittelbar liegenden Glasscheibe 1 erfasst und eventuelle Änderungen in positiver oder negativer Richtung zur Korrektur und / oder Festlegung der Steuerungssignale des Stellmotors 12 verwendet werden.

Die Steuerung der komplexen Bewegungsvorgänge und die Signalverarbeitung der verwendeten Sensoren erfordern ein spezielles Steuerungsprogramm.

### Bezugszeichenliste

- 1: Glasscheibe
- 2: Schneidrad
- 3: Schwingarm
- 4: Dehnungsmessstreifen
- 5: Drehkopf
- 6: Schwingarmhalterung
- 7: Federbefestigung
- 8: Schraubenverbindung für den Schwingarm
- 9: Führungsstift
- 10: Führungsschlitz
- 11: Grundkonsole
- 12: Stellmotor
- 13: Motorachse
- 14: Verbindungshülse mit Innengewinde
- 15: Gewindespindel
- 16: Verbindungselement zur Federjustierung
- 17: Federelement
- 18: Klemmschraube
- 19: Drehachse
- 20: Schneidrad - Halter
- 21: Messelektronik für den Dehnungsmessstreifen und Wärmesensor
- 22: großer Radius des Durchbruchs
- 23: kleiner Radius des Durchbruchs
- 24: Werkzeugwechselkopf
- 25: Transportrollen
- 26: Datenkabel
- 27: Steuerung (Stellmotor)

## Patentansprüche

1. Vorrichtung zum Erzeugen einer sicheren Bruchlinie für das industrielle Ablängen von Glasscheiben mittels eines unter Auflastdruck auf einer Floatglas-Linie laufenden Schneidrads, mit den folgenden Merkmalen:
a) einer Grundkonsole (11) mit einer Drehachse (19) auf der Unterseite, in der ein einseitig arbeitender Drehkopf (5) drehbar gelagert ist,
b) einem Stellmotor (12) auf der Oberseite der Grundkonsole (11),
c) einer balkenartig ausgestalteten Schwingarmhalterung (6), die auf der einen Seite mit der Arbeitsseite des Drehkopfs (5) mittels Verbindungen (8) verbunden ist und die auf der entgegengesetzten anderen Seite einen Schneidradhalter (20) mit einem Schneidrad (2) trägt,
d) einen Schwingarm (3), und
e) einem Dehnungsmessstreifen (4) zur Erfassung seiner Schwingungen, einer diesbezüglichen Messelektronik (21) und einem Datenkabel (26) zur Steuerung (27) des Stellmotors (12),
**dadurch gekennzeichnet, dass**
f) der Drehknopf (5) der Grundkonsole (11) auf der Arbeitsseite über ein Federelement (17) und ein horizontal fest gelagertes, aber vertikal beweglich gelagertes Verbindungselement (16) mit einer Gewindespindel (15) verbunden ist, die in einer Verbindungshülse (14) sich vertikal bewegen kann,
g) der Stellmotor (12) eine Motorachse (13) aufweist, die mit der Verbindungshülse (14) fest verbunden ist,
h) der Schwingarm (3) die Form einer, mittels 4 großen zylindrischen Bohrungen und einer kleinen zylindrischen Bohrung zwischen ihnen, gezielt geschwächten Zone im mittleren Bereich der Schwingarmhalterung (6) aufweist, wobei diese Bohrungen sich in der Seitenansicht als Kreise mit großem Radius (22) und als ein Kreis mit kleinem Radius (23) darstellen und diese Bohrungen in ihren Längsachsen nahtlos ineinander übergehen, und
i) der Dehnungsmessstreifen (4) auf der Oberseite des Schwingarms (3) angebracht ist.

2. Vorrichtung nach Anspruch 1, **dadurch gekennzeichnet, dass** im Schwingarm (3) jeweils 2 große zylindrische Bohrungen sich überschneiden, wobei die zugehörigen Kreise in der Schnittebene eine vesica piscis bilden, und dass der Abstand des Mittelpunkts des kleinen Kreises von den Mittelpunkten der beiden Paare der großen Kreise gleich dem doppelten Radius (23) des kleinen Kreises ist, und dass sich der kleine Radius (23) zum großen Radius (22) verhält wie 1 zu 1,55.

3. Vorrichtung nach Anspruch 1 oder 2, **dadurch gekennzeichnet, dass** mehrere Vorrichtungen revolverartig in der Art eines Werkzeugwechselkopfs (24) angeordnet sind.

4. Vorrichtung nach Anspruch 1, 2 oder 3, **dadurch gekennzeichnet, dass** mittels eines Sensors die Höhenlage der vor dem Schneidvorgang unmittelbar liegenden Glasscheibe (1) erfasst und eventuelle Änderungen in positiver oder negativer Richtung zur Korrektur und/oder Festlegung der Steuerungssignale des Stellmotors (12) verwendet werden.

## Claims

1. Device for producing a reliable breaking line for the industrial cutting to length of glass sheets by means of a cutting wheel which moves under load pressure on a float glass line, having the following features:
a) a base console (11) which has a rotation axis (19) at the lower side and in which there is rotatably supported a rotation head (5) which operates at one side,
b) a servo motor (12) at the upper side of the base console (11),
c) a rocker bar retention member (6) which is constructed in a bar-like manner and which is connected at one side to the operating side of the rotation head (5) by means of connections (8) and which carries at the other opposite side a cutting wheel retention member (20) having a cutting wheel (2),
d) a rocker bar (3), and
e) an expansion measurement strip (4) in order to detect the oscillations thereof, an electronic measurement system (21) relating thereto and a data cable (26) for controlling (27) the servo motor (12),
**characterized in that**
f) the rotation knob (5) of the base console (11) is connected at the operating side by means of a resilient element (17) and a horizontally fixedly supported but vertically movably supported connection element (16) to a threaded spindle (15) which can move vertically in a connection sleeve (14),
g) the servo motor (12) has a motor shaft (13) which is securely connected to the connection sleeve (14),
h) the rocker bar (3) has the form of a zone which is weakened in a selective manner by means of 4 large cylindrical holes and a small cylindrical hole between them in the central region of the rocker bar retention member (6), wherein these holes constitute in the side view circles having a large radius (22) and a circle having a small radius (23) and these holes merge seamlessly into each other in the longitudinal axes thereof, and
i) the expansion measurement strip (4) is attached at the upper side of the rocker bar (3).

2. Device according to Claim 1, **characterized in that** two large cylindrical holes intersect in the rocker bar (3), wherein the associated circles form a vesica piscis in the plane of section and **in that** the spacing of the center point of the small circle from the center points of the two pairs of large circles is equal to double the radius (23) of the small circle, and **in that** the small radius (23) behaves with respect to the large radius (22) as 1 does to 1.55.

3. Device according to Claim 1 or 2, **characterized in that** a plurality of devices are arranged in a turret-like manner in the manner of a tool changing head (24).

4. Device according to Claim 1, 2 or 3, **characterized in that**, by means of a sensor, the height position of the glass sheet (1) which is located directly upstream of the cutting operation is detected and any changes in a positive or negative direction are used to correct and/or determine the control signals of the servo motor (12).

## Revendications

1. Dispositif destiné à la production d'une ligne de rupture sûre pour la découpe industrielle à longueur de vitres au moyen d'une molette de découpe tournant sous charge sur une ligne de verre flotté, avec les caractéristiques suivantes :
a) une console de base (11) avec un axe de rotation (19) sur le côté inférieur, dans laquelle une tête rotative (5) travaillant unilatéralement est supportée en rotation,
b) un servomoteur (12) sur le côté supérieur de la console de base (11),
c) un élément de retenue de bras oscillant (6) constitué à la façon d'une poutre qui, sur un côté, est raccordé au côté de travail de la tête rotative (5) au moyen de raccordements (8) et qui, sur l'autre côté opposé, porte un support de molette de découpe (20) avec une molette de découpe (2),
d) un bras oscillant (3), et
e) une jauge extensométrique (4) destinée à la détection de ses oscillations, une électronique de mesure (21) afférente et un câble de données (26) destiné à la commande (27) du servomoteur (12), **caractérisé en ce que**
f) sur le côté de travail, par le biais d'un élément de ressort (17) et d'un élément de raccordement (16) supporté de façon fixe horizontalement mais mobile verticalement, le bouton rotatif (5) de la console de base (11) est raccordé à une broche filetée (15) qui peut se déplacer verticalement dans une douille de raccordement (14),
g) le servomoteur (12) présente un axe de moteur (13) qui est raccordé de façon fixe à la douille de raccordement (14),
h) le bras oscillant (3) présente la forme d'une zone, dans la partie centrale de l'élément de retenue à bras oscillant (6), affaiblie de façon spécifique au moyen de 4 grands alésages cylindriques et d'un petit alésage cylindrique entre eux, ces alésages se présentant, dans la vue de côté, en tant que cercles avec un grand rayon (22) et tant que cercle avec un petit rayon (23), et ces alésages se confondant selon une transition continue au niveau de leurs axes longitudinaux, et
i) la jauge extensométrique (4) est mise en place sur le côté supérieur du bras oscillant (3).

2. Dispositif selon la revendication 1, **caractérisé en ce que**, dans le bras oscillant (3), respectivement 2 grands alésages cylindriques se recoupent, les cercles correspondants formant dans le plan de coupe un vesica piscis, et **en ce que** la distance entre le point central du petit cercle et les points centraux des deux paires de grands cercles est égale au double rayon (23) du petit cercle, et **en ce que** le petit rayon (23) par rapport au grand rayon (22) entretient un rapport de 1 à 1,55.

3. Dispositif selon la revendication 1 ou 2, **caractérisé en ce que** plusieurs dispositifs sont disposés en revolver à la façon d'une tête de changement d'outil (24).

4. Dispositif selon la revendication 1, 2 ou 3, **caractérisé en ce que**, au moyen d'un capteur, la position en hauteur de la vitre (1) située immédiatement avant le processus de coupe est détectée, et d'éventuelles modifications dans le sens positif ou négatif sont utilisées en vue de la correction et/ou la spécification des signaux de commande du servomoteur (12).
